(19) **Europäisches Patentamt**

**European Patent Office**

**Office européen des brevets**

(11) Veröffentlichungsnummer: **0 141 451**
**B1**

# EUROPÄISCHE PATENTSCHRIFT

(12)

(45) Veröffentlichungstag der Patentschrift:
**11.05.88**

(51) Int. Cl.⁴: **B 23 B 31/04**

(21) Anmeldenummer: **84201347.6**

(22) Anmeldetag: **17.09.84**

(54) **Werkzeugaufnahmevorrichtung und Werkzeugträger.**

(30) Priorität: **30.09.83 CH 5340/83**

(43) Veröffentlichungstag der Anmeldung:
**15.05.85 Patentblatt 85/20**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**DE - B - 2 848 227**
**DE - U - 7 513 937**
**US - A - 2 283 514**
**US - A - 3 022 084**

(73) Patentinhaber: **Fabel, Eugen, Buchfeldterrasse 2,
CH-6033 Buchrain (CH)**

(72) Erfinder: **Bütikofer, Willy, Lyssstrasse 16, CH-2560 Nidau
(CH)**

(74) Vertreter: **Tschudi, Lorenz et al, Bovard AG
Patentanwälte VSP Optingenstrasse 16,
CH-3000 Bern 25 (CH)**

ACTORUM AG

## Beschreibung

Die vorliegende Erfindung bezieht sich auf eine Werkzeugaufnahmevorrichtung gemäß dem Oberbegriff des Patentanspruches 1 sowie auf einen Werkzeugträger und einen Verlängerungsteil zur Verwendung mit der Werkzeugaufnahmevorrichtung.

Mit den heute bekannten Werkzeugaufnahme- und Spannvorrichtungen, wie sie z.B. aus der Schweizer Patentschrift 537 770 vorbekannt sind, ist es kaum möglich, schwere, große Werkzeugträger kombiniert mit universell verwendbaren Werkzeugaufnahmevorrichtungen einzusetzen. Entweder ist der Widerstand der bekannten Verbindungen zwischen Werkzeugaufnahmevorrichtung und Werkzeugträger gegen die Verdrehbeanspruchung zu schwach, oder die Art der Aufnahme ermöglicht keine exakte Positionierung der Werkzeuge. Im weiteren kann bei der Verwendung großer Werkzeuge die Arretierschraube abgeschert werden.

Aus der DE-U-7 513 937 ist ein Spannfutter für drehend antreibbare Werkzeuge mit einem Spannfutterkörper, der eine Aufnahmebohrung mit zwei in Achsrichtung hintereinanderliegenden Spannschrauben aufweist, vorbekannt. In die Aufnahmebohrung sind Reduzierkörper, an denen die Werkzeuge anbringbar sind, passend aufnehmbar. Der hülsenförmige Reduzierkörper weist zwei Durchbrüche auf, durch die die Spannschrauben hindurchragen und am Schaft des Werkzeuges zu dessen Spannung unmittelbar anliegen. Dieses bekannte Spannfutter weist den Nachteil auf, daß ein einwandfreier Kraftschluß zwischen Werkzeugaufnahmevorrichtung und Werkzeugträger nicht gewährleistet ist.

Es ist eine Aufgabe der vorliegenden Erfindung, eine Werkzeugaufnahmevorrichtung zu schaffen, mit welcher Werkzeugträger verschiedenster Art verwendet werden können, wobei ein einwandfreier Kraftschluß sowie eine vibrationsfreie Verbindung zwischen Werkzeugaufnahmevorrichtung und Werkzeugträger hergestellt werden soll. Im weiteren soll ein Werkzeugträger und ein Verlängerungs- oder Reduktionsteil zur Verwendung mit einer Werkzeugaufnahmevorrichtung geschaffen werden, mit welchen die gestellte Aufgabe ebenfalls gelöst werden kann.

Erfindungsgemäß werden die gestellten Aufgaben durch die kennzeichnenden Teile der unabhängigen Patentansprüche 1, 8 und 13 gelöst.

Im folgenden werden anhand der beiliegenden Zeichnung Ausführungsbeispiele und deren Verwendung näher beschrieben. Es zeigen:

Fig. 1 eine Ansicht teilweise im Schnitt einer Werkzeugaufnahmevorrichtung mit einem eingesetzten Ausdrehkopf,

Fig. 2 eine Ansicht teilweise im Schnitt einer Werkzeugaufnahmevorrichtung mit einer Verlängerung,

Fig. 3 einen Längsschnitt durch einen Teil der Werkzeugaufnahmevorrichtung und den Werkzeugträger eines weiteren Ausführungsbeispieles der Erfindung,

Fig. 4 einen Längsschnitt durch ein weiteres Ausführungsbeispiel der Erfindung.

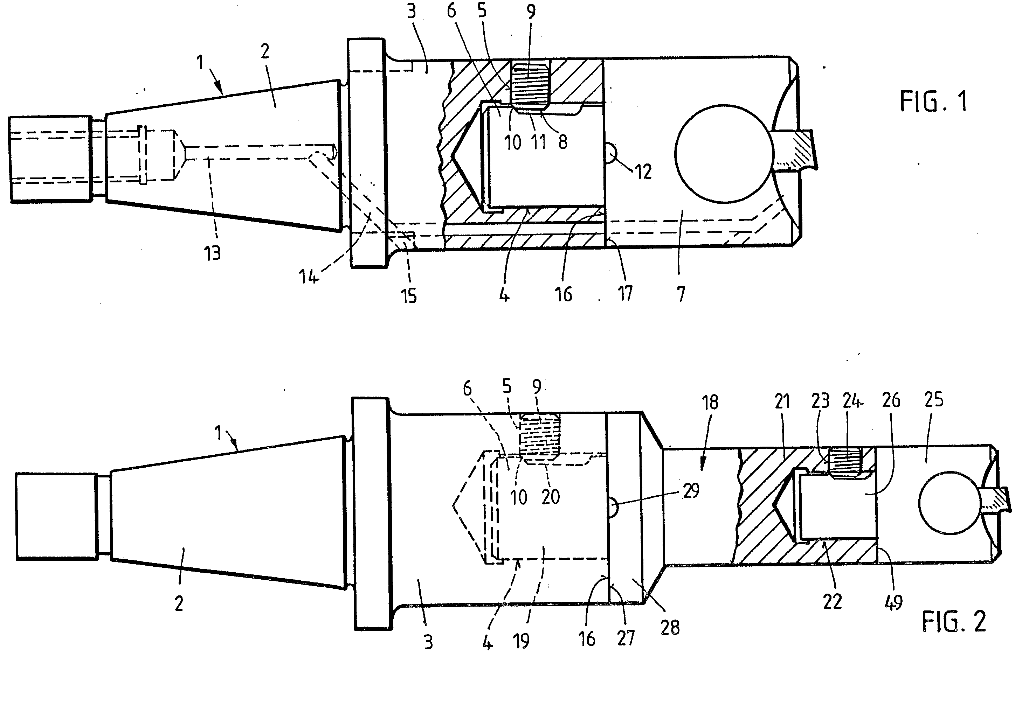

Die Werkzeugaufnahmevorrichtung 1 gemäß Fig. 1 umfaßt einen Befestigungskonus 2, der in die nicht dargestellte Werkzeugaufnahme einer Maschine eingesetzt wird. Mit diesem Befestigungskonus 2 ist ein Anschlußschaft 3 verbunden, welcher eine in seiner Längsachse verlaufende Bohrung 4 aufweist. Im Mantel des zylinderförmigen Anschlußschaftes 3 ist eine quer zur Längsachse des Anschlußschaftes verlaufende Bohrung 5 vorgesehen. Die Längsachse dieser Bohrung 5 weicht um wenige Grad von der Senkrechten auf die Längsachse des Anschlußschaftes 3 ab. In die Bohrung 4 ist ein Befestigungszapfen 6 eines Ausdrehkopfes 7 eingeführt. Am Befestigungszapfen 6 ist eine Längsfläche 8 abgeschliffen, welche um wenige Grad von der Längsachse des Anschlußschaftes abweicht, so daß diese Fläche genau senkrecht zu der Längsachse der in die Bohrung 5 eingeschraubten Spannschraube 9 zu liegen kommt. Am Befestigungszapfen 6 ist eine weitere Fläche 10 vorgesehen, welche mit der Längsachse des Befestigungszapfens 6 einen Winkel von etwa 45° einschließt. Die Spannschraube 9 ist am unteren Ende mit einer angeschrägten Fläche 11 versehen, welche auf die Fläche 10 wirkt. Im Ausdrehkopf 7 ist vorzugsweise eine Mitnehmernute 12 zum Einsetzen eines nicht dargestellten Mitnehmersteines vorgesehen. Im weiteren sind im Befestigungskonus 2, im Anschlußschaft 3 und im Ausdrehkopf 7 Bohrungen vorgesehen, welche eine Leitung 13 für ein Kühlmittel bilden. Diese Kühlmittelleitung weist gegenüber herkömmlichen Leitungen in Werkzeugaufnahmevorrichtungen den Vorteil auf, daß sie nicht in der Längsachse geführt wird und somit Einzelteile der Werkzeugaufnahmevorrichtung wie die Bohrung 4 und der Befestigungszapfen 6 nicht vom Kühlmittel benetzt werden. Der schräg zur Längsachse verlaufende Teil 14 der Kühlmittelleitung 13 ist mit einem Stopfen 15 verschlossen.

Die Längsfläche 8 am Befestigungszapfen 6 ist vorzugsweise etwa um 2° gegenüber der Längsachse der Werkzeugaufnahmevorrichtung geneigt. Beim Anziehen der Spannschraube wird eine Kraftkomponente erzeugt, die den eingespannten Werkzeugträger, im vorliegenden Falle den Ausdrehkopf 7, mit seinem Befestigungszapfen 6 in die Bohrung 4 hineinzieht und damit einen einwandfreien Kraftschluß und eine Vorspannung zwischen der Stirnfläche 16 des Anschlußschaftes 3 und der Stirnfläche 17 des Werkzeugträgers, im vorliegenden Fall des Ausdrehkopfes 7, gewährleistet.

Um einen optimalen Kraftschluß und eine Vorspannung der Stirnflächen 16 und 17 zu gewährleisten, ist mindestens eine derselben mit einer konkaven Toleranz von vorzugsweise 0,001 bis 0,003 mm hergestellt. Da beim Anziehen der Spannschrauben der Befestigungszapfen 6 etwas deformiert wird und somit seine Längsachse etwas von der Längsachse des Anschlußschaftes 3 im eingespannten Zustand abweicht, wird die Bohrung 4 vorzugsweise nicht exakt konzentrisch und parallel zur Längsachse des Anschlußschaftes 3 ausgeführt. Diese Abweichung der Längsachse der Bohrung 4 von der Längsachse des Anschlußschaftes 3 wird derart ausgeführt, daß das Werkzeug, im vorliegenden Fall der Ausdrehkopf 7, im gespannten Zustand einen minimalen Taumel von wenigen Hundertstelmillimetern aufweist. Am Mantel des Anschlußschaftes kann eine Auswuchtfläche vorgesehen sein.

In Fig. 2 ist in die Bohrung 4 der Werkzeugaufnahmevorrichtung ein Verlängerungsteil 18 mit einem Befestigungszapfen 19 eingesetzt. An der zylindermantelförmigen Oberfläche des Befestigungszapfens 19 ist ebenfalls im Bereich des Endes der Spannschraube 9 eine zur Längsachse des Anschlußschaftes 3 um wenige Grad geneigte Fläche 20 angeschliffen. Das vom Befestigungszapfen 19 abgewandte Ende 21 des Verlängerungsteiles 18 weist eine Bohrung 22 auf. Quer zu dieser Bohrung 22 ist eine mit einem Gewinde versehene Bohrung 23 zur Aufnahme einer Spannschraube 24 vorgesehen. Ein im Gegensatz zum Ausführungsbeispiel gemäß Fig. 1 kleinerer Ausdrehkopf 25 weist einen Befestigungszapfen 26 auf, der ebenfalls an seinem zylindrischen Teil im Bereich der Spannschraube 24 eine angeschliffene Fläche aufweist, die um wenige Grad von der Längsachse des Verlängerungsteils 18 abweicht. Im weiteren ist eine zusätzliche, um etwa 45° zur Längsachse geneigte Fläche im Bereich des Endes der Spannschraube am Befestigungszapfen 26 vorgesehen. In bezug auf die Stirnfläche 16 des Anschlußschaftes 3 sowie auf die ringförmige Stirnfläche 27 des Verlängerungsteiles 18 gilt dasselbe wie bereits in bezug auf die Fig. 1 erläutert wurde. An einem zylinderförmigen Teil 28 des Verlängerungsteiles 18 kann im Bereich der Stirnfläche 27 ebenfalls eine Nute 29 zur Aufnahme eines nicht dargestellten Mitnehmersteines vorgesehen sein.

Mit der beschriebenen Werkzeugaufnahmevorrichtung können verschiedenartige auswechselbare Werkzeugträger, insbesondere Ausdrehköpfe, Fräsdorne, Bohr- und Fräserhülsen, Spannzangenhalter, Fräserspannfutter, Bohrfutter, Bohrstangenhalter und Reduktionen sowie Verlängerungsteile verwendet werden. Die ringförmig um den Befestigungszapfen dieser Werkzeugträger angeordnete Stirnfläche ist vorzugsweise einsatzgehärtet und geschliffen, wobei ihr Außendurchmesser vorzugsweise mindestens demjenigen der Stirnfläche des Anschlußschaftes der Werkzeugaufnahmevorrichtung entspricht.

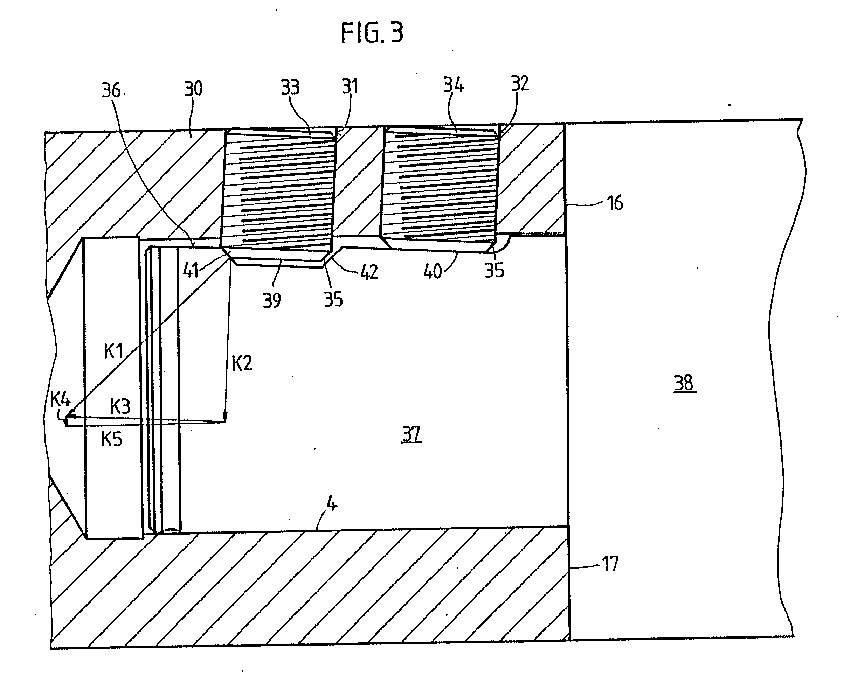

In Fig. 3 ist ein Längsschnitt durch einen Teil der Werkzeugaufnahmevorrichtung und einen Teil des Werkzeugträgers eines weiteren Ausführungsbeispieles der Erfindung dargestellt. Im Anschlußschaft 30 einer Werkzeugaufnahmevorrichtung sind zwei Bohrungen 31 und 32 vorgesehen, welche mit einem Gewinde versehen sind. Die Längsachsen dieser Bohrungen sind zur Senkrechten auf die Längsachse des Anschlußschaftes 30 der Werkzeugaufnahmevorrichtung um einen Winkel von 0° bis etwa 5° geneigt. Die in diese Bohrungen 31 und 32 eingesetzten Spannschrauben 33 und 34 weisen an ihren unteren Enden je eine angeschrägte Fläche 35 auf. Diese Fläche 35 ist Teil eines Kegelmantels, wobei der entsprechende Kegel einen Öffnungswinkel von etwa 90° aufweist. Ein in die Längsbohrung 36 des Anschlußschaftes 30 eingesetzter Befestigungszapfen 37 einer Werkzeughalterung oder einer Verlängerung 38 weist zwei angefräste Flächen 39 und 40 auf, die senkrecht zur Längsachse der Schrauben 33 und 34 verlaufen, also demzufolge mit der Längsachse des Befestigungszapfens 37 ebenfalls einen Winkel von 0° bis etwa 5° einschließen. Im weiteren sind seitlich zur hinteren Fläche 39 zwei weitere Flächen 41 und 42 angefräst, welche mit der Fläche 39 einen Winkel von etwa 45° einschließen. Die Flächen 39, 41 und 42 bilden eine querverlaufende Spannute. Beim Anziehen der Spannschraube 33 wird, sobald die Fläche 35 am unteren Ende der Schraube 33 mit der ersten Spannfläche 41 des Befestigungszapfens 37 in Berührung kommt, eine Kraftkomponente K1 erzeugt, welche in zwei zueinander senkrechte Komponenten K2 und K3 zerlegt werden kann. Die Komponente K3 kann wiederum in zwei Komponenten K4 und K5 zerlegt werden, wobei die Komponente K5 parallel zur Längsachse des Befestigungszapfens verläuft und bewirkt, daß derselbe und somit auch die Werkzeughalterung oder die Verlängerung in die Bohrung 36 hineingezogen werden. Zur sicheren Arretierung des Werkzeughalters in der Werkzeugaufnahmevorrichtung wird noch die Spannschraube 34 eingeschraubt, welche durch Zusammenwirken mit der zweiten Spannfläche 40 ebenfalls eine Kraftkomponente in Richtung der Längsachse des Befestigungszapfens 37 bewirkt, welche den Werkzeughalter oder die Verlängerung zusätzlich in der Bohrung 36 der Werkzeugaufnahmevorrichtung sichert.

Bei kleineren Werkzeugaufnahmevorrichtungen kann gegebenenfalls anstelle der beiden Spannschrauben 33 und 34 nur die hintere Spannschraube 33 vorgesehen sein. Im Gegensatz zu bekannten Vorrichtungen muß zur Aufnahme der Spannschraube im Befestigungszapfen keine präzise Bohrung vorgesehen werden. Bei der Herstellung der schrägen ersten und zweiten Fläche am Befestigungszapfen genügt die Fräsgenauigkeit. Es ist kein Schleifen notwendig.

Die Distanz zwischen der hinteren Spannschraube 33 und den Stirnflächen muß in bezug auf die angefräste Fläche 41 am Befestigungszapfen zwecks optimalem Kraftschluß zwischen den Flächen 16 und 17 genau stimmen. Mit zwei einfach zu bedienenden Anzugsschrauben wird eine große Axialkraft erzeugt. Es wird eine genaue radiale Fixierung der eingespannten Werkzeugträger und ein ausreichender Widerstand gegen Torsionsbeanspruchung bei schweren Schruppbearbeitungen gewährleistet.

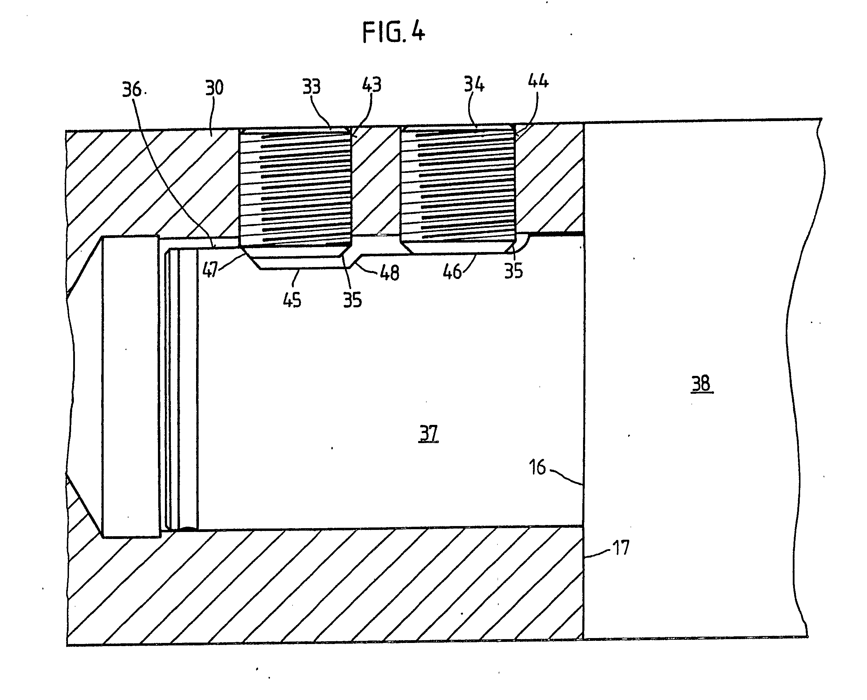

Beim Ausführungsbeispiel gemäß der Fig. 4 sind im Anschlußschaft 30 der Werkzeugaufnahmevorrichtung zwei mit einem Gewinde versehene Bohrungen 43 und 44 vorgesehen, deren Längsachsen senkrecht zur Längsachse des Anschlußschaftes bzw. zur Längsachse der Längsbohrung 36 im Anschlußschaft verlaufen. Am in die Längsbohrung 36 eingesetzten Befestigungszapfen 37 einer Werkzeughalterung oder einer Verlängerung sind zwei Flächen 45 und 46 angefräst, welche parallel zur Längsachse des Befestigungszapfens verlaufen. Die Flächen stehen senkrecht zu den Längsachsen der in die Bohrungen 43 und 44 eingesetzten Spannschrauben 33 und 34. Seitlich zur hinteren angefrästen Fläche 45 sind zwei weitere Schrägflächen 47 und 48 angefräst, welche mit der Fläche 45 einen Winkel von etwa 45° einschließen. Beim Anziehen der hinteren Spannschraube 33 erzeugt die Fläche 35 am unteren Ende der Schraube beim Berühren mit der Schrägfläche 47 ebenfalls wie beim Beispiel gemäß Fig. 3 eine Kraftkomponente in Richtung der Längsachse des Befestigungszapfens, so daß derselbe und damit auch die Werkzeughalterung oder die Verlängerung in die Bohrung 36 hineingezogen werden. Zur zusätzlichen Arretierung des Befestigungszapfens wird noch die vordere Spannschraube 34 angezogen.

### Patentansprüche

1. Werkzeugaufnahmevorrichtung mit einem Befestigungsteil und einem mit diesem verbundenen, eine erste Bohrung (4) zur Aufnahme eines Befestigungszapfens eines Werkzeugträgers aufweisenden Anschlußschaft (30) mit einer Stirnfläche (16), wobei im Mantel des Anschlußschaftes mindestens eine zweite Bohrung (31) zur Aufnahme einer Spannschraube (33) vorgesehen ist, wobei die Spannschraube (33) an ihrem unteren Ende eine angeschrägte Fläche (35) aufweist, dadurch gekennzeichnet, daß die Stirnfläche (16) des Anschlußschaftes (30) konkav ausgebildet ist.

2. Werkzeugaufnahmevorrichtung nach Patentanspruch 1, dadurch gekennzeichnet, daß eine zur zweiten Bohrung (31) parallele dritte Bohrung (32) zur Aufnahme einer Spannschraube (34) vorgesehen ist.

3. Werkzeugaufnahmevorrichtung nach Patentanspruch 1, dadurch gekennzeichnet, daß die Längsachse der zweiten Bohrung (31) mit der Senkrechten zur Längsachse des Anschlußschaftes (30) einen Winkel von 0° bis 5° einschließt.

4. Werkzeugaufnahmevorrichtung nach einem der Patentansprüche 1 bis 3, dadurch gekennzeichnet, daß die Längsachse der ersten Bohrung (4) nicht mit der Längsachse des Anschlußschaftes (30) identisch ist.

5. Werkzeugaufnahmevorrichtung nach einem der Patentansprüche 1 bis 4, dadurch gekennzeichnet, daß die Längsachse der ersten Bohrung (4) nicht parallel zur Längsachse des Anschlußschaftes (30) verläuft.

6. Werkzeugaufnahmevorrichtung nach einem der Patentansprüche 1 bis 5, dadurch gekennzeichnet, daß am Mantel des Anschlußschaftes (30) eine Auswuchtfläche vorgesehen ist.

7. Werkzeugaufnahmevorrichtung nach einem der Patentansprüche 1 bis 6, gekennzeichnet durch eine im Befestigungsteil und im Anschlußschaft verlaufende Kühlmittelleitung (13), deren im Anschlußschaft (3) verlaufender Teil zwischen dessen Mantel und der ersten Bohrung (4) vorgesehen ist.

8. Werkzeugträger zur Verwendung mit einer Werkzeugaufnahmevorrichtung nach einem der Patentansprüche 1 bis 7 mit einem Befestigungszapfen (37) zum Einführen in eine Bohrung (4) der Werkzeugaufnahmevorrichtung und einer Stirnfläche (17), wobei am Mantel des Befestigungszapfens (37) eine zum Zusammenwirken mit einer Spannschraube bestimmte, erste Spannfläche (41) vorgesehen ist, wobei die erste Spannfläche (41) nicht parallel zur Längsachse des Befestigungszapfens verläuft, dadurch gekennzeichnet, daß die Stirnfläche (17) des Werkzeugträgers (38) konkav ausgebildet ist.

9. Werkzeugträger nach Patentanspruch 8, dadurch gekennzeichnet, daß am Mantel des Befestigungszapfens mindestens eine zweite Spannfläche (39, 40) vorgesehen ist.

10. Werkzeugträger nach Patentanspruch 8, dadurch gekennzeichnet, daß die erste Spannfläche (41) mit der Längsachse des Befestigungszapfens einen Winkel von etwa 45° einschließt.

11. Werkzeugträger nach Patentanspruch 9, dadurch gekennzeichnet, daß die zweite Spannfläche (39, 40) mit der Längsachse des Befestigungszapfens einen Winkel von 0° bis 5° einschließt.

12. Werkzeugträger nach Patentanspruch 10, dadurch gekennzeichnet, daß die erste Spannfläche (41) mit der zweiten Spannfläche (39) einen Winkel von etwa 45° einschließt.

13. Verlängerungs- oder Reduktionsteil zur Verwendung mit einer Werkzeugaufnahmevorrichtung nach einem der Patentansprüche 1 bis 7 mit einem Befestigungszapfen (19) zum Einführen in eine Bohrung (4) der Werkzeugaufnahmevorrichtung und einem eine erste Bohrung (22) zur Aufnahme eines Werkzeugträgers aufweisenden Anschlußschaft (21) mit einer Stirnfläche, wobei im Mantel des Anschlußschaftes (21) mindestens eine zweite Bohrung (23) zur Aufnahme einer Spannschraube (24) vorgesehen ist, wobei am Mantel des Befestigungszapfens (19) eine zum Zusammenwirken mit einer Spannschraube bestimmte Spannfläche (10) vorgesehen ist, wobei die Spannfläche (10) nicht parallel zur Längsachse des Befestigungszapfens (19) verläuft, wobei am Mantel des Befestigungszapfens (19) eine zweite Spannfläche (20) vorgesehen ist, die erste Spannfläche (10) mit der zweiten Spannfläche (20) einen Winkel von etwa 45° einschließt, dadurch gekennzeichnet, daß die Stirnfläche des Anschlußschaftes (49) und/oder die Stirnfläche (27) des Teiles (18) konkav ausgebildet ist.

### Claims

1. Tool-holding device having a fixing part and, connected thereto, a connecting shank (3) having an end face (16) and a first bore (4) for receiving a fixing pin of a tool support, at least a second bore (31) being provided in the jacket of the connecting shank for receiving a straining screw (33), the straining screw (33) having a beveled surface (35) at its lower end, characterized in that the end face (16) of the connecting shank (30) is made concave.

2. Tool-holding device according to patent claim 1, characterized in that a third bore (32) parallel to the second bore (31) is provided for receiving a straining screw (34).

3. Tool-holding device according to patent claim 1 or 2, characterized in that the longitudinal axis of the second bore (31) forms an angle of from 0° to 5° with the perpendicular to the longitudinal axis of the connecting shank (30).

4. Tool-holding device according to one of the patent claims 1 to 3, characterized in that the longitudinal axis of the first bore (4) is not identical to the longitudinal axis of the connecting shank (30).

5. Tool-holding device according to one of the patent claims 1 to 4, characterized in that the longitudinal axis of the first bore (4) does not run parallel to the longitudinal axis of the connecting shank (30).

6. Tool-holding device according to one of the patent claims 1 to 5, characterized in that a balancing surface is provided on the jacket of the connecting shank (30).

7. Tool-holding device according to one of the patent claims 1 to 6, characterized by a coolant line (13) running in the fixing part and in the connecting shank, the portion of which line running in the connecting shank (3) is provided between the latter's jacket and the first bore (4).

8. Tool-support for use with a tool-holding device according to one of the patent claims 1 to 7 having a fixing pin (37) for insertion into a bore (4) of the tool-holding device and an end face (17), a first chucking surface (41) being provided on the convex surface of the fixing pin (37) for co-operating with a straining screw, the first chucking surface (41) not running parallel to the longitudinal axis of the fixing pin, characterized in that the end face (17) of the tool-support (38) is made concave.

9. Tool-support according to patent claim 8, characterized in that at least a second chucking surface (39, 40) is provided on the convex surface of the fixing pin.

10. Tool-support according to patent claim 8, characterized in that the first chucking surface (41) forms an angle of about 45° with the longitudinal axis of the fixing pin.

11. Tool-support according to patent claim 9, characterized in that the second chucking surface (39, 40) forms an angle of from 0° to 5° with the longitudinal axis of the fixing pin.

12. Tool-support according to patent claim 10, characterized in that the first chucking surface (41) forms an angle of about 45° with the second chucking surface (39).

13. Extension or reduction part for use with a tool-holding device according to one of the patent claims 1 to 7 having a fixing pin (19) for insertion into a bore (4) of the tool-holding device and a connecting shank (21) having an end face and a first bore (22) for receiving a tool-support, at least a second bore (23) being provided in the jacket of the connecting shank (21) for receiving a straining screw (24), a chucking surface (10) intended for co-operating with a straining screw being provided on the convex surface of the fixing pin (19), the chucking surface (10) not running parallel to the longitudinal axis of the fixing pin (19), a second chucking surface (20) being provided on the convex surface of the fixing pin (19), the first chucking surface (10) forms an angle of about 45° with the second chucking surface (20), characterized in that the end face of the connecting shank (49) and/or the end face (27) of the part (18) is made concave.

**Revendications**

1. Dispositif de fixation d'outils avec une pièce de fixation et un fût de raccord (30) de face frontale (16), relié à celle-ci et présentant un premier alésage (4) pour recevoir un tenon de fixation d'un porte-outils, au moins un deuxième alésage pour recevoir une vis de fixation (33) étant prévu dans l'enveloppe du fût de raccord, la vis de fixation (33) présentant à son extrémité inférieure une surface oblique (35), caractérisé en ce que la face frontale (16) du fût de raccord (30) est de forme concave.

2. Dispositif de fixation d'outils selon la revendication 1, caractérisé en ce qu'un troisième alésage (32) parallèle au deuxième alésage (31) est prévu pour recevoir une vis de fixation (34).

3. Dispositif de fixation d'outils selon la revendication 1 ou 2, caractérisé en ce que l'axe longitudinal du deuxième alésage (31) forme avec la perpendiculaire, à l'axe longitudinal du fût de raccord (30), un angle de 0° à 5°.

4. Dispositif de fixation d'outils selon l'une des revendications 1 à 3, caractérisé en ce que l'axe longitudinal du premier alésage (4) n'est pas identique avec l'axe longitudinal du fût de raccord (30).

5. Dispositif de fixation d'outils selon l'une des revendications 1 à 4, caractérisé en ce que l'axe longitudinal du premier alésage (4) n'est pas parallèle à l'axe longitudinal du fût de raccord (30).

6. Dispositif de fixation d'outils selon l'une des revendications 1 à 5, caractérisé en ce qu'une surface d'équilibrage est prévue sur l'enveloppe du fût de raccord (30).

7. Dispositif de fixation d'outils selon l'une des revendications 1 à 6, caractérisé par un canal de lubrification (13), agencé dans la pièce de fixation et le fût de raccord, la partie disposée dans le fût de raccord (3) étant prévue entre l'enveloppe de celui-ci et le premier alésage (4).

8. Porte-outils en vue de l'utilisation avec un dispositif de fixation d'outils selon l'une des revendications 1 à 7, avec un tenon de fixation (37) destiné à être introduit dans un alésage (4) du dispositif de fixation d'outils et une face frontale (17), une première surface de serrage (41) déterminée étant prévue sur l'enveloppe du tenon de fixation (37) en vue d'une action avec une vis de serrage, la première surface (41) n'étant pas orientée parallèlement à l'axe longitudinal du tenon de fixation, caractérisé en ce que la face frontale (17) du porte-outils (38) présente une forme concave.

9. Porte-outils selon la revendication 8, caractérisé en ce qu'au moins une deuxième surface de serrage (39, 40) est prévue sur l'enveloppe du tenon de fixation.

10. Porte-outils selon la revendication 8, caractérisé en ce que la première surface de serrage (41) forme un angle d'environ 45° avec l'axe longitudinal du tenon de fixation.

11. Porte-outils selon la revendication 9, caractérisé en ce que la deuxième surface de serrage (39, 40) forme un angle de 0° à 5° avec l'axe longitudinal du tenon de fixation.

12. Porte-outils selon la revendication 10, caractérisé en ce que la première surface de serrage (41) forme un angle d'environ 45° avec la deuxième surface de serrage (39).

13. Pièce de rallonge ou de réduction en vue de l'utilisation avec un dispositif de fixation d'outils selon l'une des revendications 1 à 7, avec un tenon de fixation (19) destiné à être introduit dans un alésage (4) du dispositif de fixation d'outils, et avec un fût de raccord (21) avec une surface frontale, le fût de raccord présentant un premier alésage (22) pour recevoir un porte-outils, au moins un deuxième alésage (23) pour recevoir une vis de serrage (24) étant prévu dans l'enveloppe du fût de raccord (21), une surface de serrage (10) déterminée étant prévu sur l'enveloppe du tenon de fixation (19) en vue d'une action avec une vis de serrage, la surface de serrage (10) n'étant pas orientée parallèlement à l'axe longitudinal du tenon de fixation (19), une deuxième surface de fixation (20) étant prévue sur l'enveloppe du tenon de fixation (19), la première surface de serrage (10) formant un angle d'environ 45° avec la deuxième surface de serrage (20), caractérisé en ce que la surface frontale du fût de raccord (49) et/ou la surface frontale (27) de la pièce (18) présentent une forme concave.

FIG. 1

FIG. 2

0 141 451

# FIG.3

# FIG.4

0 141 451